# NEUE EUROPÄISCHE PATENTSCHRIFT

(11) **EP 1 086 162 B2**
(45) Veröffentlichungstag und Bekanntmachung des Hinweises auf die Entscheidung über den Einspruch: **20.11.2013**
(45) Hinweis auf die Patenterteilung: 10.11.2004
(21) Anmeldenummer: 99920614.7
(22) Anmeldetag: 08.04.1999
(51) Int. Cl.: C08G 77/14, C08G 77/20, C08G 77/58, C08K 3/36

(54) **NANOSTRUKTURIERTE FORMKÖRPER UND SCHICHTEN UND DEREN HERSTELLUNG ÜBER STABILE WASSERLÖSLICHE VORSTUFEN**
NANOSTRUCTURED FORMS AND LAYERS AND METHOD FOR PRODUCING THEM USING STABLE WATER-SOLUBLE PRECURSORS
CORPS MOULES ET COUCHES NANOSTRUCTURES ET LEUR PRODUCTION A L'AIDE DE PRECURSEURS STABLES SOLUBLES DANS L'EAU

(30) Priorität: 09.04.1998 DE 19816136
(43) Veröffentlichungstag der Anmeldung: 28.03.2001
(73) Patentinhaber: Leibniz-Institut für Neue Materialien gemeinnützige GmbH, 66123 Saarbrücken (DE)
(72) Erfinder: ARPAC, Ertugrul, 07200 Antalya (TR); JONSCHKER, Gerhard, D-66583 Spiesen-Elversberg (DE); SCHIRRA, Hermann, D-66113 Saarbrücken (DE); SCHMIDT, Helmut, D-66130 Saarbrücken-Güdingen (DE)
(74) Vertreter: Meissner, Bolte & Partner
(86) Internationale Anmeldenummer: PCT/EP1999/002396
(87) Internationale Veröffentlichungsnummer: WO 1999/052964

(56) Entgegenhaltungen:
- EP-A- 0 263 428
- EP-A- 0 486 469
- WO-A-98/40444
- DATABASE WPI Derwent Publications Ltd., London, GB; AN 85-265863 XP002115369 & JP 60 177079 A (TOSHIBA), 11. September 1985 (1985-09-11)

## Beschreibung

Die vorliegende Erfindung betrifft nanostrukturierte Formkörper und Schichten und deren Herstellung über stabile wasserlösliche Vorstufen und insbesondere nanostrukturierte Formkörper und Schichten, die sich für optische Zwecke eignen.

In der Literatur sind Verfahren zur Herstellung von transparenten Werkstoffen, welche aus organisch-anorganischen Kompositen bestehen und bei denen wasserhaltige Vorstufen eingesetzt werden, bereits für Beschichtungszwecke beschrieben.

Insbesondere beschreibt JP-A-53-6339 die Synthese eines Komposits, bei welcher ausgehend von einem reaktiv-organisch modifizierten Silan und einem inertorganisch modifizierten Silan die Hydrolyse in Anwesenheit von wäßrigem Kieselsol sowie Phosphorsäure als Katalysator für die Hydrolyse durchgeführt wird. Dabei wird der in der Kondensationsreaktion entstandene Alkohol nicht entfernt.

JP-A-63-37168 beschreibt die Synthese eines Komposits aus in einem wäßrigen Medium dispergierten und radikalisch vernetzenden Monomeren auf Acrylat-Basis und organisch modifizierten Silanen, wobei der organische Rest dieser Silane ebenfalls ein radikalisch vernetzendes System darstellt, in Anwesenheit von kolloidaler Kieselsäure und nicht-ionischen Tensiden. Hydrolyse- und Kondensationsreaktion werden in einem eigenen Verfahrensschritt durchgeführt. Auch hier wird der in der Kondensationsreaktion entstandene Alkohol nicht entfernt.

Eine ähnliche Beschreibung findet sich in JP-A-63-37167 für ein System, bei dem die Silan-Komponente über kationisch vernetzende Reste verfügt.

US-A-5411787 beschreibt die Synthese eines Komposits aus in Wasser dispergierten polymeren Bindemitteln, mindestens einer Aminosilan-Komponente und kolloidalen Teilchen mit einer Teilchengröße von weniger als 20 nm. Auch in diesem Fall wird der durch die Hydrolyse des Silans entstandene Alkohol nicht entfernt.

in US-A-4799963 wird die Herstellung von Kompositen auf Silan-Basis beschrieben, in die zusätzlich kolloidale Kieselsäure oder nanoskaliges Ceroxid eingearbeitet werden.

In den genannten Literaturstellen finden sich keine Hinweise über den Wirkungsmechanismus und auch nur wenig Angaben über die Topfzeit der darin beschriebenen Systeme. Ebenso fehlen meist die Angaben über Restlösungsmittel-Gehalte, wobei aber ein rechnerisches Nachvollziehen der Synthesen auf Restlösungsmittel-Gehalte von größer als 10 Volumen-% schließen läßt.

Auf der Basis des soeben beschriebenen Standes der Technik wurde untersucht, inwieweit durch eine gezielte Beschichtung von kolloidalen Systemen mit funktionellen Silanen eine Reduzierung der Wasserempfindlichkeit, d.h. des Fortschreitens der Hydrolyse- und Kondensationsreaktion, erzielbar ist und inwieweit damit stabile Systeme für die Herstellung von Formkörpern und Schichten herstellbar sind, die sich auch für die industrielle Anwendung eignen.

WO 99/51793, eine gemäß Art, 54(3) und (4) EPÜ 1973 zu berücksichtigende Druckschrift für die Vertragsstaaten BE, CH, ES, FR, GB, IT, LI, NL, PT, SE betrifft ein Mittel zur Versiegelung von metallischen Untergrinden, das aus wenigstens einem Silanderivat und kolloidaler Kieselsäure und/oder kolloidalem Silikat besteht.

Aufgabe der vorliegenden Erfindung war somit die Bereitstellung eines Verfahrens zur Herstellung von nanostrukturierten Formkörpern und Schichten, vorzugsweise solchen, die für optische Zwecke geeignet sind, über stabile wasserlösliche Zwischenstufen.

Erfindungsgemäß wurde gefunden, daß wäßrige, elektrostatisch stabilisierte (und dadurch extrem konzentrationsempfindliche) kolloidale Suspensionen mit reaktiven monomeren oder oligomeren Komponenten (Silanen oder Vorkondensaten derselben) beschichtet werden können und dadurch beim Aufkonzentrieren den von Stern beschriebenen Effekt (Z. Elektrochem., 508 (1924)) der Aggregation zweier gleichsinnig geladener Teilchen bei deren Annäherung, insbesondere aber auch die ansonsten spontan ablaufenden chemischen Reaktionen zwischen reaktiven Oberflächengruppen zweier Teilchen, nicht zeigen. Die Aufkonzentrierung und Verschiebung des Reaktionsgleichgewichts auf die Produktseite unter Bildung der Oberflächenkondensate wird durch das im Vakuum durchgeführte Entfernen des in der Kondensationsreaktion entstandenen Alkohols (in der Regel Methanol oder Ethanol) erreicht, wobei sich bei sehr hoher Lagerstabilität der Kondensate (> 14 Tage) relativ geringe Restlösungsmittel-Gehalte (in der Regel nicht mehr als 20 Gew.-% und insbesondere nicht mehr als 10 Gew.-%) ergeben.

Durch die Reversibilität der Bindung Oberflächenmodifizierungsmittel-Teilchen (z.B. Wasserstoff-Brückenbindung oder Metall-Sauerstoff-Bindung (-Al-O-Si-, -Ti-O-Si-usw., siehe z.B. Chem. Mat. 7 (1995), 1050 - 52) kann bei Zuführung von Wärme der oben beschriebene Prozeß umgekehrt werden, so daß eine Vernetzung der Partikel unter Verfestigung erfolgen kann. Eine weitere Reaktion kann auch über entsprechend ausgewählte organische Gruppen am Oberflächenmodifizierungsmittel erfolgen (z.B. Reaktion dieser Gruppen untereinander).

So können z.B. wäßrige Sole, wie z.B. Böhmit-, TiO₂-, ZrO₂- oder SiO₂-Sole, aber auch andere wäßrige Sole von Verbindungen der Haupt- und Nebengruppen-Metalle mit organisch modifizierten Alkoxysilanen derart umgesetzt werden, daß nach dem Abziehen des Lösungsmittels und gegebenenfalls der anschließenden Dispergierung des flüssigen Rückstandes in Wasser klare Lösungen erhalten werden, die über einen längeren Zeitraum stabil sind. Dieses Abziehen des Lösungsmittels (Alkohols) ist erforderlich, um die Reaktion der Beschichtung der Teilchen mit den organisch modifizierten Alkoxysilanen so weit zu führen, daß ein hydrolyse- und kondensationsstabiles flüssiges System entsteht. Diese Systeme können mit üblichen Verfahren beispielsweise für Beschichtungszwecke eingesetzt und je nach funktioneller Gruppe am organisch modifizierten Alkoxysilan gegebenenfalls mit Hilfe entsprechender Katalysatoren thermisch oder photochemisch gehärtet werden. Bei der thermischen Härtung bilden sich anorganische Netzwerke und bei Verwendung entsprechender organischer Gruppen parallel dazu auch organische Verknüpfungen. Die resultierenden Nanokomposite zeichnen sich durch eine hohe Transparenz aus. Wenn sie als Schicht verwendet werden, zeigen sie eine gute Haftung auf sehr vielen Substraten und außerordentlich hohe Kratzfestigkeit.

Ein Gegenstand der vorliegenden Erfindung ist demgemäß ein Verfahren zur Herstellung einer Zusammensetzung für die Bereitstellung von nanostrukturierten Formkörpem und Schichten, welches wie in Anspruch 1 definiert ist und dadurch gekennzeichnet ist, daß der Alkohol in einer solchen Menge entfernt wird, daß der Restalkohol-Gehalt der Zusammensetzung nicht mehr als 20 Gew.-%, vorzugsweise nicht mehr als 15 Gew.-% und insbesondere nicht mehr als 10 Gew.-% ausmacht.

Gegenstand der vorliegenden Erfindung sind auch die durch das obige Verfahren erhältlichen Zusammensetzungen (nur für die Vertragsstaaten AT, DE, DK, FI, GR, IE) und die Verwendung derselben für die Herstellung von nanostrukturierten Formkörpern und mit nanostrukturierten Schichten versehenen Substraten.

Das erfindungsgemäße Verfahren unterscheidet sich von ähnlichen Verfahren des Standes der Technik insbesondere dadurch, daß ein beträchtlicher Teil des im System vorhandenen Lösungsmittels (Alkohols) aus dem System entfernt wird. Hierdurch wird das Hydrolyse- und Kondensationsgleichgewicht auf die Produktseite verschoben und eine Stabilisierung des entsprechenden flüssigen Systems erreicht. In der Regel werden mindestens 30 Gew.-%, insbesondere mindestens 50 Gew.-% und bevorzugt mindestens 70 Gew.-% der Theorie des durch Hydrolyse von Alkoxygruppen entstandenen Alkohols entfernt. Besonders bevorzugt werden mindestens 80 Gew.-% und noch bevorzugter 90 Gew.-% dieses Alkohols entfernt. In dieser Berechnung ist der gegebenenfalls ursprünglich vorhandene Alkohol (z.B. aus dem Sol-Ausgangsmaterial) nicht eingeschlossen (es wird davon ausgegangen, daß die entsprechende Alkoholmenge zu 100% entfernt wird), wohl aber die Menge an Alkohol, die bereits bei der Herstellung der gegebenenfalls eingesetzten Vorkondensate entstanden ist. Dadurch wird in der Regel erreicht, daß 10 - 80% (vorzugsweise 20 - 50%) aller anwesenden kondensationsfähigen (hydrolysierten) Gruppen des Silans eine Kondensationsreaktion eingehen.

Die Entfernung des Alkohols aus dem Reaktionssystem erfolgt vorzugsweise unter vermindertem Druck, damit eine zu starke thermische Belastung des Systems vermieden werden kann. In der Regel sollte bei der Entfernung des Alkohols aus dem System eine Temperatur von 60°C, insbesondere 50°C und besonders bevorzugt 40°C, nicht überschritten werden.

Im folgenden werden die im erfindungsgemäßen Verfahren eingesetzten Ausgangsmaterialien näher beschrieben.

Bei dem eingesetzten Sol kann es sich sowohl um ein wäßriges als auch ein alkoholisches oder ein wäßrig/alkoholisches Sol handein. Bevorzugt werden rein wäßrige Sole eingesetzt. Wird ein Sol mit Alkohol-Gehalt eingesetzt, handelt es sich bei dem Alkohol vorzugsweise um einen solchen mit 1 bis 4 Kohlenstoffatomen, d.h. Methanol, Ethanol, Propanol, Isopropanol und die Butanole.

Das erfindungsgemäße Sol enthält eine oder mehrere Verbindungen (vorzugsweise eine Verbindung) eines oder mehrerer Elemente, die aus Silicium und den Hauptund Nebengruppen-Metallen ausgewählt sind. Bei den Haupt- und Nebengruppen-Metallen handelt es sich vorzugsweise um solche aus der dritten und vierten Hauptgruppe (insbesondere Al, Ga, Ge und Sn) und der dritten bis fünften Nebengruppe des Periodensystems (insbesondere Ti, Zr, Hf, V, Nb und Ta). Es können jedoch auch andere Metallverbindungen zu vorteilhaften Ergebnissen führen, wie beispielsweise solche von Zn, Mo und W.

Bei den entsprechenden Elementverbindungen handelt es sich um Oxide der Oxidhydrate. Demgemäß handelt es sich bei den im erfindungsgemäß eingesetzten Sol vorhandenen Verbindungen insbesondere (und bevorzugt) um SiO₂, Al₂O₃, AIOOH (insbesondere Böhmit), TiO₂, ZrO₂ und Mischungen derselben.

Das im erfindungsgemäßen Verfahren eingesetzte Sol weist in der Regel einen Feststoffgehalt von 5 bis 50 Gew.-%, bevorzugt 10 bis 40 und besonders bevorzugt 15 bis 30 Gew.-%, auf.

Die im erfindungsgemäßen Verfahren einzusetzenden Spezies mit hydrolysierbaren Alkoxygruppen schließen mindestens ein organisch modifiziertes Alkoxysilan bzw. ein davon abgeleitetes Vorkondensat ein. Organisch modifizierte Alkoxysilane, sind solche der allgemeinen Formel (I):

R'₄₋ₓSi(OR)ₓ (I)

in welcher die Reste R, gleich oder verschieden voneinander (vorzugsweise gleich), gegebenenfalls substituierte (vorzugsweise unsubstituierte) Kohlenwasserstoffgruppen mit 1 bis 8, bevorzugt 1 bis 6 und besonders bevorzugt 1 bis 4 Kohlenstoffatomen darstellen (insbesondere Methyl oder Ethyl), die Reste R', gleich oder verschieden voneinander, jeweils eine gegebenenfalls substituierte Kohlenwasserstoffgruppe mit 1 bis 20 Kohlenstoffatomen darstellen und x 1, 2 oder 3 ist.

Beispiele für Reste R' in der obigen Formel sind Alkyl-, Alkenyl-, Aryl-, Alkylaryl-, Arylalkyl-, Arylalkenyl-, Alkenylaryl-Reste (vorzugsweise mit jeweils 1 bis 12 und insbesondere 1 bis 8 Kohlenstoffatomen und cyclische Formen einschließend), die durch Sauerstoff-, Schwefel-, Stickstoffatome oder die Gruppe NR" (R" = Wasserstoff oder C₁₋₄-Alkyl) unterbrochen sein können und einen oder mehrere Substituenten aus der Gruppe der Halogene und der gegebenenfalls substituierten Amino-, Amid-, Carboxy-, Mercapto-, Isocyanato-, Hydroxy-, Alkoxy-, Alkoxycarbonyl-, Acryloxy-, Methacryloxy- oder Epoxygruppen tragen können.

Es befindet sich unter den obigen Alkoxysilanen der allgemeinen Formel (I) mindestens eines, in weichem mindestens ein Rest R' über eine Gruppierung verfügt, die eine Polyadditions- (einschließlich Polymerisations-) oder Polykondensationsreaktion eingehen kann.

Bei dieser zur Polyadditions- oder Polykondensationsreaktion befähigten Gruppierung handelt es sich um eine Epoxygruppe.

Demgemäß sind besonders bevorzugte organisch modifizierte Alkoxysilane der allgemeinen Formel (I) zur Verwendung in der vorliegenden Erfindung solche, in denen x 2 oder 3 und insbesondere 3 ist und ein Rest (der einzige Rest) R' für ω-Glycidyloxy-C₂₋₆-alkyl steht.

Konkrete Beispiele für derartige Silane sind 3-Glycidoxypropyltri(m)ethoxysilan, 3,4-Epoxybutyltrimethoxysilan und 2-(3,4-Epoxycyclohexyl)ethyltrimethoxysilan. Weitere Beispiele für geeignete Verbindungen mit x = 1 oder 2 sind 3-Glycidoxypropyldimethyl(m)ethoxysilan.

Weitere Alkoxysilane, die bevorzugt in Kombination mit Alkoxysilanen mit den obigen zur Polyadditions- bzw. Polykondensationsreaktion befähigten Gruppierungen eingesetzt werden können, sind beispielsweise Tetramethoxysilan, Tetraethoxysilan, Tetra-n-propoxysilan, Tetra-n-butoxysilan, Cyclohexyltrimethoxysilan, Cyclopentyltrimethoxysilan, Ethyltrimethoxysilan, Phenylethyltrimethoxysilan, Phenyltrimethoxysilan, n-Propyttrimethoxysilan, Cyclohexylmethyldimethoxysilan, Dimethyldimethoxysilan, Diisopropyldimethoxysilan, Phenylmethyldimethoxysilan, Phenylethyltriethoxysilan, Phenyltriethoxysilan, Phenylmethyldiethoxysilan und Phenyldimethylethoxysilan.

Insbesondere wenn den erfindungsgemäßen nanostrukturierten Formkörpern und Schichten schmutz- und wasserabweisende Eigenschaften und eine niedrige Oberflächenenergie verliehen werden sollen, können zusammen mit dem organisch modifizierten Alkoxysilan auch Silane eingesetzt werden, die über direkt an Silicium gebundene fluorierte Alkyl-Reste mit mindestens 4 Kohlenstoffatomen (und vorzugsweise mindestens 3 Fluoratomen) verfügen, wobei die Kohlenstoffatome in α- und β-Stellung zum Silicium vorzugsweise keine Fluoratome tragen, z.B. (Tridecafluor-1,1,2,2-tetrahydrooctyl)methyldiethoxysilan, (Tridecafluor-1,1,2,2-tetrahydrooctyl)triethoxysilan, (Heptadecafluor-1,1,2,2-tetrahydrodecyl)methyldiethoxysilan und (Heptadecafluor-1,1,2,2-tetrahydrodecyl)triethoxysilan.

Selbstverständlich können die Spezies mit hydrolysierbaren Alkoxygruppen, die erfindungsgemäß eingesetzt werden, zusätzlich zu den obigen Silanen (insbesondere den organisch modifizierten) auch von Silanen verschiedene Spezies umfassen. Beispiele hierfür sind Alkoxide (vorzugsweise mit C₁₋₄-Alkoxygruppen) von Aluminium, Titan, Zirkonium, Tantal, Niob, Zinn, Zink, Wolfram, Germanium und Bor. Konkrete Beispiele für derartige Verbindungen sind Aluminium-sek.-butylat, Titanisopropoxid, Titanpropoxid, Titanbutoxid, Zirkoniumisopropoxid, Zirkoniumpropoxid, Zirkoniumbutoxid, Zirkoniumethoxid, Tantalethoxid, Tantalbutoxid, Niobethoxid, Niobbutoxid, Zinn-t-butoxid, Wolfram(VI)ethoxid, Germaniumethoxid, Germaniumisopropoxid und Di-t-butoxyaluminotriethoxysilan.

Insbesondere bei den reaktionsfähigeren Alkoxiden (z.B. von Al, Ti, Zr usw.) kann es sich empfehlen, diese in kompexierter Form einzusetzen, wobei Beispiele für geeignete Komplexierungsmittel z.B. ungesättigte Carbonsäuren und β-Dicarbonyl-Verbindungen, wie z.B. Methacrylsäure, Acetylaceton und Acetessigsäureethylester, sind. Werden von den organisch modifizierten Alkoxysilanen verschiedene Spezies mit hydrolysierbaren Alkoxygruppen eingesetzt, so beträgt das Molverhältnis der organisch modifizierten Alkoxysilane zu den davon verschiedenen Spezies vorzugsweise mindestens 2:1, insbesondere mindestens 5:1 und besonders bevorzugt mindestens 10:1.

Wegen der im erfindungsgemäßen Verfahren eingesetzten organisch modifizierten Alkoxysilane mit zu einer Polykondensations- bzw. Polyadditionsreaktion befähigter Gruppierung, ist es bevorzugt, der entsprechenden Zusammensetzung auch eine Starterkomponente einzuverleiben, wobei das Molverhältnis von Starter zu organischer Gruppe in der Regel 0,15:1 nicht übersteigt.

Bei Silanen der allgemeinen Formel (I) mit Epoxygruppen eignen sich als Starter insbesondere Imidazole, Amine, Säureanhydride und Lewis-Säuren. Wenn Imidazole eingesetzt werden sollen, ist 1-Methylimidazol besonders bevorzugt. Andere bevorzugte Beispiele für Imidazol-Starter sind 2-Methylimidazol und 2-Phenylimidazol. Beispiele für Starter aus der Gruppe der primären, sekundären und tertiären Amine sind Ethylendiamin, Diethylentriamin, Triethylentetramin, 1,6-Diaminohexan, 1,6-Bis(dimethylamino)hexan, Tetramethylethylendiamin, N,N,N',N",N"-Pentamethyldiethylentriamin, 1,4-Diazabicyclo[2.2.2]-octan, Cyclohexan-1,2-diamin, 2-(Aminomethyl)-3,3,5-trimethylcyclopentylamin, 4,4'-Diaminocyclohexylmethan, 1,3-Bis(aminomethyl)cyclohexan, Bis(4-amino-3-methylcyclohexyl)methan, 1,8-Diamino-p-menthan, 3-(Aminoethyl)-3,3,5-trimethylcyclehexylamin (Isophorondiamin), Piperazin, Piperidin, Urotropin, Bis(4-aminophenyl)-methan und Bis(4-aminophenyl)sulfon. Die als Starter eingesetzten Amine können auch mit Silanen funktionalisiert sein. Beispiele hierfür sind N-(2-Aminoethyl)-3-aminopropyltriethoxysilan, N-(2-Aminoethyl)-3-aminopropyltrimethoxysilan, Aminopropyltrimethoxysilan und Aminopropyltriethoxysilan. Zusätzlich können Bortrifluorid-Addukte von Aminen, wie beispielsweise BF₃-Ethylamin, eingesetzt werden. Weiter kann die organische Vernetzung mit Hilfe von Säureanhydriden (vorzugsweise in Kombination mit tertiären Aminen), wie Ethylbicyclo[2.2.1]hepten-2,3-dicarbonsäureanhydrid, Hexahydronaphthalindicarbonsäureanhydrid, Phthalsäureanhydrid, 1,2-Cyclohexandicarbonsäureanhydrid, aber auch [3-(Triethoxysilyl)-propyl]bernsteinsäureanhydrid bewerkstelligt werden. Zusätzlich geeignete Katalysatoren für die Vernetzung von Epoxygruppen im vorliegenden Fall sind (gegebenenfalls vorhydrolysierte) Alkoxide von Aluminium, Titan und Zirkonium, z.B. Al(OC₂H₄OC₄H₉)₃, sowie organische Carbonsäuren, wie z.B. Propionsäure.

Selbstverständlich ist es auch möglich, der Zusammensetzung rein organische Komponenten einzuverleiben, die mit reaktiven Gruppen an den Silanen der allgemeinen Formel (I) reagieren und so eine weitere Vernetzung bei der Härtung herbeiführen können.

Werden nanostrukturierte Formkörper und Schichten mit hydrophilen Eigenschaften gewünscht, ist es zum Beispiel möglich, der erfindungsgemäßen Zusammensetzung zusätzlich Komponenten einzuverleiben, die zu derartigen hydrophilen Eigenschaften führen. Hierzu können kovalent an die anorganische Matrix anbindbare Komponenten (z.B. eine Komponente mit freier Hydroxygruppe, wie (Meth)acrylsäure-2-hydroxyethylester) oder eine frei in der Matrix bewegliche hydrophile Komponente (z.B. ein Tensid) oder eine Kombination der beiden verwendet werden.

Bei den erfindungsgemäß einzusetzenden Bedingungen, die zu einer (Weiter)-hydrolyse der Spezies mit hydrolysierbaren Alkoxygruppen bzw. der entsprechenden Vorkondensate führen, handelt es sich vorzugsweise um die Anwesenheit von mindestens 0,5 Mol H₂O pro hydrolysierbarer Alkoxygruppe. Diese Wassermenge wird in der Regel bereits durch das im Sol vorhandene Wasser bereitgestellt. Ist dies nicht der Fail, sollte die entsprechende Wassermenge separat zugesetzt werden.

Noch bevorzugter ist es, wenn ein Katalysator für die Hydrolyse (und Kondensation) der Alkoxygruppen anwesend ist. Bevorzugte Katalysatoren für diesen Zweck sind saure Katalysatoren, z.B. wäßrige (Mineral)säuren wie z.B. HCl.

Das Mengenverhältnis der eingesetzten Ausgangsmaterialien (Sol und Spezies mit hydrolysierbaren Alkoxygruppen) wird vorzugsweise so gewählt, daß im endgültigen Formkörper bzw. in der endgültigen Schicht (nach Härtung) der vom Sol herrührende Feststoffgehalt 1 bis 50 Gew.-% und insbesondere 5 bis 30 Gew.-% des Formkörpers bzw. der Schicht ausmacht.

Das Verfahren der Kontaktierung des wäßrigen und/oder alkoholischen Sols mit den Spezies mit hydrolysierbaren Alkoxygruppen unter Bedingungen, die zu einer Hydrolyse der Spezies mit Alkoxygruppen führen, ist dem Fachmann geläufig und wird in den folgenden Beispielen weiter erläutert. Nach der Entfernung des Lösungsmittels (Alkohols) aus der Zusammensetzung (die in der Regel dazu führt, daß 10 bis 80% und insbesondere 20 bis 50% der hydrolysierbaren Ausgangs-Alkoxygruppen eine Kondensationsreaktion eingegangen sind) kann es sich für bestimmte Zwecke als vorteilhaft erweisen, die resultierende Zusammensetzung durch Zugabe von Wasser auf eine geeignete Viskosität einzustellen. Bevorzugt liegt die Viskosität der Zusammensetzung, insbesondere für Beschichtungszwecke, unter 5000 mPas, insbesondere unter 3000 mPas.

Zur Herstellung von nanostrukturierten Formkörpern und mit nanostrukturierten Schichten versehenen Substraten mit Hilfe der erfindungsgemäßen Zusammensetzung bringt man diese entweder in eine Form ein oder auf ein Substrat auf und führt anschließend - gegebenenfalls nach vorangehender Trocknung bei Raumtemperatur bzw. leicht erhöhter Temperatur, insbesondere im Falle der Herstellung von Schichten - eine thermische (und gegebenenfalls zusätzlich eine photochemische) Härtung durch. Im Falle der Herstellung von Schichten können alle herkömmlichen Beschichtungsverfahren eingesetzt werden, z.B. Tauchen, Fluten, Walzen, Sprühen, Rakeln, Schleudern oder Siebdruck.

Die Aushärtetemperatur liegt in der Regel im Bereich von 90°C bis 300°C, insbesondere 110°C bis 200°C, im Falle der Schichtherstellung insbesondere auch abhängig von der Temperaturbeständigkeit des zu beschichtenden Substrats.

Wie bereits eingangs erwähnt, eignet sich die erfindungsgemäße Zusammensetzung zur Beschichtung der verschiedensten Substrate und zeigt auf diesen auch ohne Oberflächenbehandlung in vielen Fällen eine sehr gute Haftung sowie eine außerordentlich hohe Kratzfestigkeit. Besonders bevorzugte Substrate für die Schichtherstellung sind Glas, nicht transparente und transparente Kunststoffe und Metalle. Beispiele für geeignete Kunststoffe sind Polycarbonat, Poly(meth)acrylate, Polystyrol Polyvinylchlorid, Polyethylenterephthalat, Polypropylen und Polyethylen, während ein bevorzugtes Metall-Substrat Aluminium ist.

Demgemäß eignen sich die erfindungsgemäß zugänglichen Zusammensetzungen für eine Vielzahl von Anwendungen. Beispiele hierfür sind insbesondere die folgenden:

Beschichtung zur Erhöhung der Kratz- und Abriebfestigkeit auf:
- Decklacken von Haushaltsgegenständen und Transportmitteln
- transparenten und nicht-transparenten Polymerbauteilen
- metallischen Untergründen
- keramischen und Glasuntergründen

Beschichtung zur Verbesserung der Abrieb- und Korrosionsbeständigkeit von Edelund Nicht-Edelmetallen:
- Mg: Motorblöcke, Brillengestelle, Sportgeräte, Felgen, Getriebegehäuse
- Al: Transportmittel-Karosserien, Felgen, Fassadenelemente, Möbel, Wärmetauscher
- Stahl: Preßformen zur Bauteilherstellung, Sanitärarmaturen
- Zn: Dachkonstruktionen, Schußwaffen, Airbag-Beschleunigungsmassen
- Cu: Türbeschläge, Wärmetauscher, Waschbecken

Beschichtungen zur Verbesserung des Reinigungsverhaltens:
Hinsichtlich Beispielen für diese Anwendung sei auf die DE-A-19544763 verwiesen.

Beschichtungen zur Verbesserung der Bauteilentformung und Verringerung der Anhaftung:
- Metall- und Polymertransportbänder
- Walzen für Polymerisationsreaktionen
- Preßformen zur Herstellung von Polystyrol-Bauteilen
- Antigraffiti auf Decklacken und Fassaden

Beschichtungen für Antibeschlageffekt:
- Transportmittelverglasung
- Brillengläser
- Spiegel (z.B. Badezimmer-, Kfz-Rück- und Kosmetikspiegel)
- optische Bauteile (z.B. Spektroskopspiegel und Laserprismen)
- Elemente zur Verkapselung (z.B. Gehäuse für meteorologische Geräte)

Beschichtungen für Antireflexeigenschaften:
- Polymer- oder Glasabdeckungen von Anzeigeelementen (z.B. Kfz-Armaturenbretter, Schaufensterverglasungen)

Beschichtungen für lebensmitteltechnische Anwendungen:
- Diffusionssperrschichten (Verhinderung der Diffusion von z.B. Gasen, Acetaldehyd, Blei- oder Alkaliionen, Geruchs- und Geschmacksstoffen)

Beschichtung von Hohlglasartikeln:
- Beschichtungen von Getränkeflaschen zur Erhöhung des Berstdruckes
- Einfärbung von farblosem Glas mittels einer Beschichtung

Herstellung von optischen Formkörpern und selbsttragenden Folien:
- Nanokomposit-Brillengläser kratz und abriebfeste Folien für Verpackungen

Die folgenden Beispiele dienen der weiteren Erläuterung der vorliegenden Erfindung. In allen diesen Beispielen wurde das durch die Hydrolyse entstandene Lösungsmittel (Ethanol) zu mindestens etwa 95% entfernt.

### Beispiel 1

27,8 g (0,1 Mol) (3-Glycidyloxypropyl)triethoxysilan (GLYEO) wurden mit 27,8 g Kieselsol (30 gew.-%-ige wäßrige Lösung von SiO₂, Levasil® 200S der Firma Bayer) versetzt. Das Gemisch wurde anschließend 5 Stunden bei Raumtemperatur gerührt. Darauf wurde das durch Hydrolyse entstandene Ethanol destillativ entfem (Rotationsverdampfer, maximale Badtemperatur 40°C). Der Rückstand wurde mit 1,11 g (0,005 Mol) N-(2-Aminoethyl)-3-aminopropyltrimethoxysilan (DIAMO) versetzt und eine Stunde bei Raumtemperatur gerührt.

Mit dem resultierenden System wurden Polycarbonat- und Aluminium-Platten sowie CR-39-Linsen beschichtet. Die Polycarbonat-Platten wurden durch Coronaentladung vorbehandelt. Die beschichteten Polycarbonat- und Aluminium-Platten wurden nach 30-minütiger Aufbewahrung bei Raumtemperatur 4 Stunden bei 130°C ausgehärtet Die CR-39-Linsen wurden nach 30-minütiger Aufbewahrung bei Raumtemperatur 4 Stunden bei 90°C ausgehärtet.

### Beispiel 2

Beispiel 1 wurde wiederholt, jedoch wurden statt DIAMO 3,05 g (0,001 Mol) [3-(Triethoxysilyl)propyl]bernsteinsäureanhydrid (GF20) eingesetzt. Die Untersuchung-der Abriebbeständigkeit von mit dieser Zusammensetzung beschichteten Polycarbonat-Platten ergab bem Taber-Abrasions-Test (Rollenmaterial CS 10F, 1000 Zyklen, Rollenlast 500 g) einen Streulichtverlust von 7%.

### Beispiel 3

Beispiel 1 wurde wiederholt, jedoch wurde statt des Kieselsols eine Böhmit-Suspension (2,78 g Disperal® P3 in 25 g destilliertem Wasser) verwendet.

### Beispiel 4

Beispiel 3 wurde wiederholt, jedoch wurden als Katalysator statt DIAMO 3,78 g (0,01 Mol) Al(OEtOBu)₃ verwendet.

### Beispiel 5

27,8 g (0,1 Mol) GLYEO wurden mit 27,8 g des in Beispiel 1 beschriebenen Kieselsols versetzt. Das Gemisch wurde anschließend 5 Stunden bei Raumtemperatur gerührt, worauf sich eine Entfernung des durch Hydrolyse entstandenen Ethanols wie in Beispiel 1 beschrieben anschloß. Der Rückstand wurde mit 2,84 g (0,01 Mol) TiO₂-haltigem Sol, das wie im folgenden beschrieben hergestellt worden war, versetzt und eine Stunde bei Raumtemperatur gerührt.

Zur Herstellung des TiO₂-haltigen Sols wurden 28,42 g (0,1 Mol) Tetraisopropylorthotitanat (Ti(OiPr)₄) in 60 ml Isopropanol gelöst und mit konzentrierter Salzsäure im Molverhältnis 1:1 versetzt. Nach 2-stündigem Rühren bei Raumtemperatur wurden die flüchtigen Bestandteile abrotiert und der Rückstand wurde in 70 ml Wasser aufgenommen.

### Beispiel 6

139,0 g (0,5 Mol) GLYEO wurden mit 62,4 g (0,3 Mol) Tetraethoxysilan (TEOS) gemischt. Das Reaktionsgemisch wurde mit einer HCl-sauren Böhmit-Suspension (12,82 g nanoskaliges Böhmitpulver in 128,20 g 0,1 n HCl-Lösung) versetzt und 5 Stunden bei Raumtemperatur gerührt. Das durch Hydrolyse entstandene Ethanol wurde wie in Beispiel 1 beschrieben destillativ entfernt. Darauf wurden der Mischung 3,78 g (0,01 Mol) Al(OEtOBu)₃ zugesetzt, woran sich ein 1-stündiges Rühren bei Raumtemperatur anschloß.

Durch Coronaentladung vorbehandelte Polycarbonat-Platten und Plasma-vorbehandelte CR-39-Linsen wurden mit der so hergestellten Zusammensetzung beschichtet und eine Stunde thermisch bei 130° bzw. 90°C ausgehärtet.

### Beispiel 7

55,6 g 3-Glycidyloxypropyltriethoxysilan wurden mit 0,51 g Tridecafluor-1,1,2,2-tetrahydrooctyl-1-triethoxysilan versetzt und gerührt. Die resultierende Mischung wurde mit 10,85 g 0,1 n HCl (entsprechend der stöchiometrischen Wassermenge für die Hydrolyse der Alkoxysilane) versetzt. Nach 24-stündigem Rühren bei Raumtemperatur wurden 55,6 g des in Beispiel 1 beschriebenen Kieselsols dazugegeben und es wurde 4 Stunden bei Raumtemperatur gerührt. Der durch die Hydrolyse entstandene Alkohol wurde wie in Beispiel 1 beschrieben am Rotationsverdampfer entfernt (abrotierte Menge 26,4 g). Darauf wurden 2,22 g DIAMO zugesetzt und es wurde eine weitere Stunde bei Raumtemperatur gerührt.

### Beispiel 8

Beispiel 1 wurde wiederholt, aber statt DIAMO wurden 1,32 g (0,005 Mol) Trimethoxysilylpropyldiethylentriamin (TRIAMO) eingesetzt.

### Beispiel 9

Beispiel 1 wurde wiederholt, jedoch wurden statt DIAMO 0,74 g (0,01 Mol) Propionsäure als Starter verwendet.

### Beispiel 10

Beispiel 1 wurde wiederholt, jedoch wurden statt DIAMO 3,87 g (0,01 Mol) Al(OEtOBu)₃ als Starter verwendet.

### Beispiel 11

Beispiel 1 Wurde wiederholt, jedoch wurden statt DIAMO 0,41 g (0,005 Mol) 1-Methylimidazol als Starter verwendet.

### Beispiel 12

Beispiel 1 wurde wiederholt, jedoch wurden statt DIAMO 5,27 g (0,01 Mol) einer Mischung verwendet, die durch Vereinigen von 3-Aminopropyltriethoxysilan (AMEO) mit GF20 im Molverhältnis 1:1 unter Eiskühlung erhalten worden war.

### Beispiel 13

Beispiel 6 wurde wiederholt, jedoch wurden statt der HCl-sauren Böhmit-Suspension 95,5 g des in Beispiel 1 beschriebenen Kieselsols verwendet und die Menge an Katalysator wurde verfünffacht.

Durch Coronaentladung vorbehandelte Polycarbonat-Platten und Plasma-vorbehandelte CR-39-Linsen wurden mit der resultierenden Zusammensetzung beschichtet und eine Stunde thermisch bei 130°C bzw. 90°C ausgehärtet.

### Beispiel 14

27,8 g (0,1 Mol) GLYEO wurden mit 13,5 g 0,1 n HCl versetzt und 2 Stunden bei Raumtemperatur gerührt. Zu diesem Vorhydrolysat wurden 27,8 g Organosol (30 Gew.-% SiO₂ in Isopropanol, Bayer PPL 6454-6456) gegeben und 5 Stunden bei Raumtemperatur gerührt. Anschließend wurden das durch Hydrolyse entstandene Ethanol sowie das Lösungsmittel Isopropanol destillativ entfernt. Der Rückstand wurde mit 18,9 g H₂O (pH 3,2) versetzt. Anschließend wurden 1,11 g (0,005 Mol) DIAMO unter starkem Rühren zugegeben und es wurde 1 Stunde bei Raumtemperatur gerührt.

Mit der resultierenden Zusammensetzung wurden Polycarbonat- und Aluminium-Platten sowie CR-39-Linsen beschichtet. Die Polycarbonat-Platten wurden durch Coronaentladung vorbehandelt. Die beschichteten Polycarbonat- und Aluminium-Platten wurden nach 30-minütiger Aufbewahrung bei Raumtemperatur 4 Stunden bei 130°C ausgehärtet. Die CR-39-Linsen wurden nach 30 Minuten bei Raumtemperatur 4 Stunden bei 90°C ausgehärtet.

## Patentansprüche (Patentansprüche für folgende(n) Vertragsstaat(en): AT, DE, DK, FI, GR, IE)

1. Verfahren zur Herstellung einer Zusammensetzung für die Bereitstellung von nanostrukturierten Formkörpern und Schichten, umfassend die Kontaktierung eines wäßrigen und/oder alkoholischen Sols einer Verbindung eines aus Silicium und den Haupt- und Nebengruppen-Metallen ausgewählten Elements, wobei es sich bei der das Sol aufbauenden Verbindung um mindestens ein Oxid oder Oxidhydrat handelt, mit über hydrolysierbare Alkoxygruppen verfügenden Spezies, die mindestens ein organisch modifiziertes Alkoxysilan oder ein davon abgeleitetes Vorkondensat einschließen, unter Bedingungen, die zu einer (Weiter)hydrolyse der Spezies führen, und die anschließende Entfernung von gebildetem und gegebenenfalls bereits ursprünglich vorhandenem Alkohol, **dadurch gekennzeichnet, dass** der Alkohol in einer solchen Menge entfernt wird, dass der Restalkohol-Gehalt in der Zusammensetzung nicht mehr als 20 Gew.-% ausmacht und das organisch modifizierte Alkoxysilan mindestens eine Verbindung der allgemeinen Formel (I) einschließt:
R'₄₋ₓSi(OR)ₓ (I)
in welcher die Reste R gegebenenfalls substituierte Kohlenwasserstoffgruppen mit 1 bis 8 Kohlenstoffatomen darstellen, die Reste R', gleich oder verschieden voneinander, jeweils eine gegebenenfalls substituierte Kohlenwasserstoffgruppe mit 1 bis 20 Kohlenstoffatomen darstellen und x 1, 2 oder 3 ist, wobei mindestens ein Rest R' über eine Epoxygruppe als zur Polyadditions- oder Polykondensationsreaktion befähigte Gruppierung verfügt.

2. Verfahren nach Anspruch 1, in welchem die entfernte Alkohol-Menge die Menge ist, die zusätzlich zur Gesamtmenge des gegebenenfalls bereits ursprünglich vorhandenen Alkohols mindestens 30 Gew.-% und insbesondere mindestens 50 Gew.-% des Alkohols entspricht, der durch Hydrolyse aller ursprünglich vorhandenen Alkoxygruppen theoretisch gebildet werden kann.

3. Verfahren nach irgendeinem der Ansprüche 1 und 2, in welchem der Zusammensetzung nach der Entfernung des Alkohols Wasser zur Einstellung einer geeigneten Viskosität zugesetzt wird.

4. Verfahren nach irgendeinem der Ansprüche 1 bis 3, in welchem ein wäßriges Sol eingesetzt wird

5. Verfahren nach irgendeinem der Ansprüche 1 bis 4, in welchem die das Sol aufbauenden Verbindungen von mindestens einem aus Silicium und den Metallen der dritten und vierten Hauptgruppe und der dritten bis fünften Nebengruppe des Periodensystems ausgewählten Element, und insbesondere von Si, Al, Sn, Ti oder Zr, abgeleitet sind.

6. Verfahren nach irgendeinem der Ansprüche 1 bis 5, in welchem es sich bei dem Sol um ein solches von SiO₂, Al₂O₃, AlOOH, TiO₂ und/oder ZrO₂ handelt.

7. Verfahren nach irgendeinem der Ansprüche 1 bis 6, in welchem bei dem organisch modifizierten Alkoxysilan der allgemeinen Formel (I) die Reste R C₁₋₄-Alkylgruppen, insbesondere Methyl und Ethyl, repräsentieren und x 2 oder 3, insbesondere 3, ist.

8. Verfahren nach irgendeinem der Ansprüche 1 bis 7, in welchem es sich bei dem bzw. mindestens einem der Rest(e) R' um eine ω-Glycidoxy-C₂₋₆-alkylgruppe handelt.

9. Verfahren nach irgendeinem der Ansprüche 1 bis 8, in welchem der Zusammensetzung ein Katalysator für die Polyadditions- bzw. Polykondensationsreaktion zugesetzt wird.

10. Verfahren nach irgendeinem der Ansprüche 1 bis 9, in welchem die Bedingungen, die zu einer (Weiter)hydrolyse der über hydrolysierbare Alkoxygruppen verfügenden Spezies führen, die Anwesenheit von (a) mindestens 0,5 Mol H₂O pro hydrolysierbarer Alkoxygruppe und (b) einem vorzugsweise sauren Katalysator für die Hydrolysereaktion einschließen.

11. Verfahren nach irgendeinem der Ansprüche 1 bis 10, bei dem das Sol in einer solchen Menge eingesetzt wird, dass im fertiggestellten Formkörper bzw. in der fertiggestellten Schicht der Sol-Feststoffgehalt 1 bis 50 Gew.-% und insbesondere 5 bis 30 Gew.-% des Formkörpers bzw. der Schicht ausmacht.

12. Zusammensetzung für die Bereitstellung von nanostrukturierten Formkörpern und Schichten, erhältlich gemäß dem Verfahren nach irgendeinem der Ansprüche 1 bis 11.

13. Verfahren zur Herstellung von nanostrukturierten Formkörpern und mit nanostrukturierten Schichten versehenen Substraten, bei dem man eine gemäß dem Verfahren nach irgendeinem der Ansprüche 1 bis 11 hergestellte Zusammensetzung
(a) in eine Form einbringt; oder ,
(b) auf ein Substrat aufbringt; und
anschließend eine thermische und gegebenenfalls zusätzlich eine photochemische Härtung durchführt.

14. Verfahren nach Anspruch 13, bei dem es sich bei dem Substrat um ein solches aus Glas, Kunststoff oder Metall handelt.

15. Nanostrukturierte Formkörper und mit nanostrukturierten Schichten versehene Substrate, erhältlich nach dem Verfahren gemäß irgendeinem der Ansprüche 13 und 14.

16. Verwendung der nanostrukturierten Formkörper und mit nanostrukturierten Schichten versehenen Substrate nach Anspruch 15 für optische Zwecke.

## Patentansprüche (Patentansprüche für folgende(n) Vertragsstaat(en): BE, CH, ES, FR, GB, IT, LI, NL, PT, SE)

1. Verfahren zur Herstellung einer Zusammensetzung für die Bereitstellung von nanostrukturierten Formkörpern und Schichten, umfassend die Kontaktierung eines wäßrigen und/oder alkoholischen Sols einer Verbindung eines aus Silicium und den Haupt- und Nebengruppen-Metallen ausgewählten Elements, wobei es sich bei der das Sol aufbauenden Verbindung um mindestens ein Oxid oder Oxidhydrat handelt, mit über hydrolysierbare Alkoxygruppen verfügenden Spezies, die mindestens ein organisch modifiziertes Alkoxysilan oder ein davon abgeleitetes Vorkondensat einschließen, unter Bedingungen, die zu einer (Weiter)hydrolyse der Spezies führen, und die anschließende Entfernung von gebildetem und gegebenenfalls bereits ursprünglich vorhandenem Alkohol, **dadurch gekennzeichnet, dass** der Alkohol in einer solchen Menge entfernt wird, dass der Restalkohol-Gehalt in der Zusammensetzung nicht mehr als 20 Gew.-% ausmacht und das organisch modifizierte Alkoxysilan mindestens eine Verbindung der allgemeinen Formel (I) einschließt:
R'₄₋ₓSi(OR)ₓ (I)
in welcher die Reste R gegebenenfalls substituierte Kohlenwasserstoffgruppen mit 1 bis 8 Kohlenstoffatomen darstellen, die Reste R', gleich oder verschieden voneinander, jeweils eine gegebenenfalls substituierte Kohlenwasserstoffgruppe mit 1 bis 20 Kohlenstoffatomen darstellen und x 1, 2 oder 3 ist, wobei mindestens ein Rest R' über eine Epoxygruppe als zur Polyadditions- oder Polykondensationsreaktion befähigte Gruppierung verfügt.

2. Verfahren nach Anspruch 1, in welchem die entfernte Alkohol-Menge die Menge ist, die zusätzlich zur Gesamtmenge des gegebenenfalls bereits ursprünglich vorhandenen Alkohols mindestens 30 Gew.-% und insbesondere mindestens 50 Gew.-% des Alkohols entspricht, der durch Hydrolyse aller ursprünglich vorhandenen Alkoxygruppen theoretisch gebildet werden kann.

3. Verfahren nach irgendeinem der Ansprüche 1 und 2, in welchem der Zusammensetzung nach der Entfernung des Alkohols Wasser zur Einstellung einer geeigneten Viskosität zugesetzt wird.

4. Verfahren nach irgendeinem der Ansprüche 1 bis 3, in welchem ein wäßriges Sol eingesetzt wird

5. Verfahren nach irgendeinem der Ansprüche 1 bis 4, in welchem die das Sol aufbauenden Verbindungen von mindestens einem aus Silicium und den Metallen der dritten und vierten Hauptgruppe und der dritten bis fünften Nebengruppe des Periodensystems ausgewählten Element, und insbesondere von Si, Al, Sn, Ti oder Zr, abgeleitet sind.

6. Verfahren nach irgendeinem der Ansprüche 1 bis 5, in welchem es sich bei dem Sol um ein solches von SiO₂, Al₂O₃, AlOOH, TiO₂ und/oder ZrO₂ handelt.

7. Verfahren nach irgendeinem der Ansprüche 1 bis 6, in welchem bei dem organisch modifizierten Alkoxysilan der allgemeinen Formel (I) die Reste R C₁₋₄-Alkylgruppen, insbesondere Methyl und Ethyl, repräsentieren und x 2 oder 3, insbesondere 3, ist.

8. Verfahren nach irgendeinem der Ansprüche 1 bis 7, in welchem es sich bei dem bzw. mindestens einem der Rest(e) R' um eine ω-Glycidoxy-C₂₋₆-alkylgruppe handelt.

9. Verfahren nach irgendeinem der Ansprüche 1 bis 8, in welchem der Zusammensetzung ein Katalysator für die Polyadditions- bzw Polykondensationsreaktion zugesetzt wird.

10. Verfahren nach irgendeinem der Ansprüche 1 bis 9, in welchem die Bedingungen, die zu einer (Weiter)hydrolyse der über hydrolysierbare Alkoxygruppen verfügenden Spezies führen, die Anwesenheit von (a) mindestens 0,5 Mol H₂O pro hydrolysierbarer Alkoxygruppe und (b) einem vorzugsweise sauren Katalysator für die Hydrolysereaktion einschließen

11. Verfahren nach irgendeinem der Ansprüche 1 bis 10, bei dem das Sol in einer solchen Menge eingesetzt wird, dass im fertiggestellten Formkörper bzw. in der fertiggestellten Schicht der Sol-Feststoffgehalt 1 bis 50 Gew,-% und insbesondere 5 bis 30 Gew.-% des Formkörpers bzw. der Schicht ausmacht.

12. Verfahren zur Herstellung von nanostrukturierten Formkörpern und mit nanostrukturierten Schichten versehenen Substraten, bei dem man eine gemäß dem Verfahren nach irgendeinem der Ansprüche 1 bis 11 hergestellte Zusammensetzung
(a) in eine Form einbringt; oder
(b) auf ein Substrat aufbringt; und
anschließend eine thermische und gegebenenfalls zusätzlich eine photochemische Härtung durchführt,
mit der Maßgabe, dass das Substrat nicht metallisch ist.

13. Verfahren nach Anspruch 12, bei dem es sich bei dem Substrat um ein solches aus Glas oder kunststoff handelt.

14. Nanostrukturierte Formkörper und mit nanostrukturierten Schichten versehene Substrate, erhältlich nach dem Verfahren gemäß irgendeinem der Ansprüche 12 und 13.

15. Verwendung der nanostruktunerten Formkörper und mit nanostrukturierten Schichten versehenen Substrate nach Anspruch 14 für optische Zwecke.

## Claims (Claims for the following Contracting State(s): AT, DE, DK, FI, GR, IE)

1. A process of preparing a composition for providing nanostructured mouldings and layers, comprising contacting an aqueous and/or alcoholic sol of a compound of an element selected from silicon and metals of the main groups and transition groups of the Periodic Table, wherein the compound constituting the sol is at least one oxide or oxide hydrate, with species possessing hydrolysable alkoxy groups and comprising at least one organically modified alkoxysilane or a precondensate derived therefrom, under conditions which lead to (further) hydrolysis of the species, and subsequent removal of alcohol formed and optionally alcohol already present originally, **characterized in that** the alcohol is removed in an amount such that the residual alcohol content in the composition is not more than 20% by weight, and the organically modified alkoxysilane comprises at least one compound of the general formula (I):
R'₄₋ₓSi(OR)ₓ (I)
in which the radicals R are optionally substituted hydrocarbon groups having 1 to 8 carbon atoms, the radicals R' are identical or different from each other and are each an optionally substituted hydrocarbon group having 1 to 20 carbon atoms and x is 1, 2 or 3, wherein at least one radical R' has an epoxy group as group capable of polyaddition- or polycondensation reaction.

2. The process according to claim 1, in which the amount of alcohol removed is the amount which, in addition to the total amount of any alcohol already present originally, corresponds to at least 30% by weight and in particular at least 50% by weight of the alcohol which may be formed theoretically by hydrolysis of all alkoxy groups originally present.

3. The process according to any one of claims 1 and 2, in which, following removal of the alcohol, water is added to the composition for the purpose of adjusting an appropriate viscosity.

4. The process according to any of claims 1 to 3, in which an aqueous sol is used.

5. The process according to any of claims 1 to 4, in which the compounds constituting the sol are derived from at least one element selected from silicon and the metals of the third and fourth main groups and of the third to fifth transition groups of the Periodic Table, and in particular are derived from Si, Al, Sn, Ti or Zr.

6. The process according to any of claims 1 to 5, in which the sol is one of SiO₂, Al₂O₃, AlOOH, TiO₂ and/or ZrO₂.

7. The process according to any of claims 1 to 6, in which in the organically modified alkoxysilane of the general formula (I) the radicals R are C₁₋₄-alkyl groups, especially methyl and ethyl, and x is 2 or 3, especially 3.

8. The process according to any of claims 1 to 7, in which the radical R' or the at least one of the radicals R', respectively, is an ω-glycidyloxy-C₂₋₆-alkyl group.

9. The process according to any of claims 1 to 8, in which a catalyst for the polyaddition- or polycondensation reaction is added to the composition.

10. The process according to any of claims 1 to 9, in which the conditions which lead to (further) hydrolysis of the species possessing hydrolysable alkoxy groups comprise the presence of (a) at least 0.5 mol of H₂O per hydrolysable alkoxy group and (b) a preferably acidic catalyst for the hydrolysis reaction.

11. The process according to any of claims 1 to 10, in which the sol is used in an amount such that in the finished moulding or in the finished layer the sol solids content makes up from 1 to 50% by weight and in particular from 5 to 30% by weight of the moulding or layer, respectively.

12. A composition for the provision of nanostructured mouldings and layers, obtainable by the process according to any of claims 1 to 11.

13. A process for producing nanostructured mouldings and substrates provided with nanostructured layers, in which a composition prepared by the process according to any of claims 1 to 11
(a) is introduced into a mould; or
(b) is applied to a substrate; and
subsequently thermal and additionally, if desired, photochemical curing is conducted.

14. The process according to claim 13, in which the substrate is of glass, plastic or metal.

15. Nanostructured mouldings and substrates provided with nanostructured layers, obtainable by the process according to any one of claims 13 and 14.

16. Use of the nanostructured mouldings and substrates provided with nanostructured layers according to claim 15 for optical purposes.

## Claims (Claims for the following Contracting State(s): BE, CH, ES, FR, GB, IT, LI, NL, PT, SE)

1. A process of preparing a composition for providing nanostructured mouldings and layers, comprising contacting an aqueous and/or alcoholic sol of a compound of an element selected from silicon and metals of the main groups and transition groups of the Periodic Table, wherein the compound constituting the sol is at least one oxide or oxide hydrate, with species possessing hydrolysable alkoxy groups and comprising at least one organically modified alkoxysilane or a precondensate derived therefrom, under conditions which lead to (further) hydrolysis of the species, and subsequent removal of alcohol formed and optionally alcohol already present originally, **characterized in that** the alcohol is removed in an amount such that the residual alcohol content in the composition is not more than 20% by weight, and the organically modified alkoxysilane comprises at least one compound of the general formula (I):
R'₄₋ₓSi(OR)ₓ (I)
in which the radicals R are optionally substituted hydrocarbon groups having 1 to 8 carbon atoms, the radicals R' are identical or different from each other and are each an optionally substituted hydrocarbon group having 1 to 20 carbon atoms and x is 1, 2 or 3, wherein at least one radical R' has an epoxy group as group capable of polyaddition- or polycondensation reaction.

2. The process according to claim 1, in which the amount of alcohol removed is the amount which, in addition to the total amount of any alcohol already present originally, corresponds to at least 30% by weight and in particular at least 50% by weight of the alcohol which may be formed theoretically by hydrolysis of all alkoxy groups originally present.

3. The process according to any one of claims 1 and 2, in which, following removal of the alcohol, water is added to the composition for the purpose of adjusting an appropriate viscosity.

4. The process according to any of claims 1 to 3, in which an aqueous sol is used.

5. The process according to any of claims 1 to 4, in which the compounds constituting the sol are derived from at least one element selected from silicon and the metals of the third and fourth main groups and of the third to fifth transition groups of the Periodic Table, and in particular are derived from Si, Al, Sn, Ti or Zr.

6. The process according to any of claims 1 to 5, in which the sol is one of SiO₂, Al₂O₃, AlOOH, TiO₂ and/or ZrO₂.

7. The process according to any of claims 1 to 6, in which in the organically modified alkoxysilane of the general formula (I) the radicals R are C₁₋₄-alkyl groups, especially methyl and ethyl, and x is 2 or 3, especially 3.

8. The process according to any of claims 1 to 7, in which the radical R' or the at least one of the radicals R', respectively, is an ω-glycidyloxy-C₂₋₆-alkyl group.

9. The process according to any of claims 1 to 8, in which a catalyst for the polyaddition- or polycondensation reaction is added to the composition.

10. The process according to any of claims 1 to 9, in which the conditions which lead to (further) hydrolysis of the species possessing hydrolysable alkoxy groups comprise the presence of (a) at least 0.5 mol of H₂O per hydrolysable alkoxy group and (b) a preferably acidic catalyst for the hydrolysis reaction.

11. The process according to any of claims 1 to 10, in which the sol is used in an amount such that in the finished moulding or in the finished layer the sol solids content makes up from 1 to 50% by weight and in particular from 5 to 30% by weight of the moulding or layer, respectively.

12. A process for producing nanostructured mouldings and substrates provided with nanostructured layers, in which a composition prepared by the process according to any of claims 1 to 11
(a) is introduced into a mould; or
(b) is applied to a substrate; and
subsequently thermal and additionally, if desired, photochemical curing is conducted,
provided that the substrate is not metallic.

13. The process according to claim 12, in which the substrate is of glass or plastic.

14. Nanostructured mouldings and substrates provided with nanostructured layers, obtainable by the process according to any one of claims 12 and 13.

15. Use of the nanostructured mouldings and substrates provided with nanostructured layers according to claim 14 for optical purposes.

## Revendications (Revendications pour l'(les) Etat(s) contractant(s) suivant(s): AT, DE, DK, FI, GR, IE)

1. Procédé de préparation d'une composition destinée à la fabrication de corps moulés ou de couches à nanostructures, comportant le fait de mettre un sol aqueux et/ou alcoolique d'un composé d'un élément choisi parmi le silicium et les métaux des groupes principaux et des groupes secondaires, le composé constituant le sol étant un oxyde ou hydrate d'oxyde au nombre d'au moins un, en contact avec une espèce comportant des groupes alcoxy hydrolysables, qui comprend au moins un alcoxy-silane à modification organique ou un précondensat qui en dérive, dans des conditions qui conduisent à une (post)hydrolyse de cette espèce, et le fait d'éliminer ensuite l'alcool formé ainsi que l'alcool qui était éventuellement déjà présent au départ, lequel procédé est **caractérisé en ce que** la quantité d'alcool éliminée est telle que l'alcool restant dans la composition ne représente pas plus de 20 % du poids de celle-ci, et **en ce que** l'alcoxysilane à modification organique comprend au moins un composé de formule générale (I) :
R'₄₋ₓSi(OR)ₓ (I)
dans laquelle les restes représentés par R sont des groupes hydrocarbonés comportant 1 à 8 atomes de carbone, éventuellement substitués, les restes représentés par R', qui sont identiques ou différents, sont des groupes hydrocarbonés comportant 1 à 20 atomes de carbone, éventuellement substitués, et x vaut 1, 2 ou 3, étant entendu qu'au moins l'un des restes représentés par R' comporte un groupe pouvant donner lieu à une réaction de polyaddition ou de polycondensation, qui est un groupe époxyde.

2. Procédé conforme à la revendication 1, dans lequel la quantité d'alcool éliminée est une quantité qui correspond à la quantité totale d'alcool éventuellement déjà présent au départ, augmentée d'au moins 30 %, et en particulier d'au moins 50 %, du poids d'alcool qui peut être théoriquement formé par hydrolyse de tous les groupes alcoxy présents au départ.

3. Procédé conforme à l'une des revendications 1 et 2, dans lequel, après avoir éliminé l'alcool, on ajoute de l'eau à la composition pour en ajuster la viscosité à une valeur appropriée.

4. Procédé conforme à l'une des revendications 1 à 3, dans lequel on utilise un sol aqueux.

5. Procédé conforme à l'une des revendications 1 à 4, dans lequel les composés constituant le sol dérivent d'au moins un élément choisi parmi le silicium et les métaux des groupes principaux III et IV et des groupes secondaires III à V du Tableau Périodique, et en particulier de Si, Al, Sn, Ti ou Zr.

6. Procédé conforme à l'une des revendications 1 à 5, dans lequel le sol est un sol de SiO₂, Al₂O₃, AlOOH, TiO₂ et/ou ZrO₂.

7. Procédé conforme à l'une des revendications 1 à 6, dans lequel, dans l'alcoxysilane à modification organique de formule générale (I), les symboles R représentent des groupes alkyle en C₁₋₄, en particulier des groupes méthyle ou éthyle, et x vaut 2 ou 3, en particulier 3.

8. Procédé conforme à l'une des revendications 1 à 7, dans lequel le reste représenté par R', ou au moins l'un des restes représentés par R', est un groupe ω-glycidyloxy-(alkyle en C₂₋₆).

9. Procédé conforme à l'une des revendications 1 à 8, dans lequel on ajoute à la composition un catalyseur pour la réaction de polyaddition ou de polycondensation.

10. Procédé conforme à l'une des revendications 1 à 9, dans lequel les conditions qui conduisent à une (post)hydrolyse de l'espèce comportant des groupes alcoxy hydrolysables comprennent la présence
a) d'au moins 0,5 mole de H₂O par mole de groupes alcoxy hydrolysables,
b) et d'un catalyseur, de préférence acide, pour la réaction d'hydrolyse.

11. Procédé conforme à l'une des revendications 1 à 10, dans lequel on utilise le sol en une quantité telle que, dans le corps moulé final ou dans la couche finale, la quantité de matières solides provenant du sol représente de 1 à 50 %, et en particulier de 5 à 30 %, du poids du corps moulé ou de la couche.

12. Composition destinée à la fabrication de corps moulés ou de couches à nanostructures, que l'on peut préparer selon un procédé conforme à l'une des revendications 1 à 11.

13. Procédé de fabrication de corps moulés à nanostructures ou de substrats porteurs de couches à nanostructures, dans lequel
a) on met dans un moule
b) ou l'on dépose sur un substrat
une composition préparée selon un procédé conforme à l'une des revendications 1 à 11, puis on la fait durcir par voie thermique, et en plus, le cas échéant, par voie photochimique.

14. Procédé conforme à la revendication 13, dans lequel le substrat est un substrat en verre, en matière plastique ou en métal.

15. Corps moulés à nanostructures ou substrats porteurs de couches à nanostructures, accessibles par un procédé conforme à l'une des revendications 13 et 14.

16. Utilisation de corps moulés à nanostructures ou de substrats porteurs de couches à nanostructures, conformes à la revendication 15, dans des applications optiques.

## Revendications (Revendications pour l'(les) Etat(s) contractant(s) suivant(s): BE, CH, ES, FR, GB, IT, LI, NL, PT, SE)

1. Procédé de préparation d'une composition destinée à la fabrication de corps moulés ou de couches à nanostructures, comportant le fait de mettre un sol aqueux et/ou alcoolique d'un composé d'un élément choisi parmi le silicium et les métaux des groupes principaux et des groupes secondaires, le composé constituant le sol étant un oxyde ou hydrate d'oxyde au nombre d'au moins un, en contact avec une espèce comportant des groupes alcoxy hydrolysables, qui comprend au moins un alcoxy-silane à modification organique ou un précondensat qui en dérive, dans des conditions qui conduisent à une (post)hydrolyse de cette espèce, et le fait d'éliminer ensuite l'alcool formé ainsi que l'alcool qui était éventuellement déjà présent au départ, lequel procédé est **caractérisé en ce que** la quantité d'alcool éliminée est telle que l'alcool restant dans la composition ne représente pas plus de 20 % du poids de celle-ci, et **en ce que** l'alcoxysilane à modification organique comprend au moins un composé de formule générale (I) :
R'₄₋ₓSi(OR)ₓ (I)
dans laquelle les restes représentés par R sont des groupes hydrocarbonés comportant 1 à 8 atomes de carbone, éventuellement substitués, les restes représentés par R', qui sont identiques ou différents, sont des groupes hydrocarbonés comportant 1 à 20 atomes de carbone, éventuellement substitués, et x vaut 1, 2 ou 3, étant entendu qu'au moins l'un des restes représentés par R' comporte un groupe pouvant donner lieu à une réaction de polyaddition ou de polycondensation, qui est un groupe époxyde.

2. Procédé conforme à la revendication 1, dans lequel la quantité d'alcool éliminée est une quantité qui correspond à la quantité totale d'alcool éventuellement déjà présent au départ, augmentée d'au moins 30 %, et en particulier d'au moins 50 %, du poids d'alcool qui peut être théoriquement formé par hydrolyse de tous les groupes alcoxy présents au départ.

3. Procédé conforme à l'une des revendications 1 et 2, dans lequel, après avoir éliminé l'alcool, on ajoute de l'eau à la composition pour en ajuster la viscosité à une valeur appropriée.

4. Procédé conforme à l'une des revendications 1 à 3, dans lequel on utilise un sol aqueux.

5. Procédé conforme à l'une des revendications 1 à 4, dans lequel les composés constituant le sol dérivent d'au moins un élément choisi parmi le silicium et les métaux des groupes principaux III et IV et des groupes secondaires III à V du Tableau Périodique, et en particulier de Si, Al, Sn, Ti ou Zr.

6. Procédé conforme à l'une des revendications 1 à 5, dans lequel le sol est un sol de SiO₂, Al₂O₃, AlOOH, TiO₂ et/ou ZrO₂.

7. Procédé conforme à l'une des revendications 1 à 6, dans lequel, dans l'alcoxysilane à modification organique de formule générale (I), les symboles R représentent des groupes alkyle en C₁₋₄, en particulier des groupes méthyle ou éthyle, et x vaut 2 ou 3, en particulier 3.

8. Procédé conforme à l'une des revendications 1 à 7, dans lequel le reste représenté par R', ou au moins l'un des restes représentés par R', est un groupe ω-glycidyloxy-(alkyle en C₂₋₆).

9. Procédé conforme à l'une des revendications 1 à 8, dans lequel on ajoute à la composition un catalyseur pour la réaction de polyaddition ou de polycondensation.

10. Procédé conforme à l'une des revendications 1 à 9, dans lequel les conditions qui conduisent à une (post)hydrolyse de l'espèce comportant des groupes alcoxy hydrolysables comprennent la présence
a) d'au moins 0,5 mole de H₂O par mole de groupes alcoxy hydrolysables,
b) et d'un catalyseur, de préférence acide, pour la réaction d'hydrolyse.

11. Procédé conforme à l'une des revendications 1 à 10, dans lequel on utilise le sol en une quantité telle que, dans le corps moulé final ou dans la couche finale, la quantité de matières solides provenant du sol représente de 1 à 50 %, et en particulier de 5 à 30 %, du poids du corps moulé ou de la couche.

12. Procédé de fabrication de corps moulés à nanostructures ou de substrats porteurs de couches à nanostructures, dans lequel
a) on met dans un moule
b) ou l'on dépose sur un substrat
une composition préparée selon un procédé conforme à l'une des revendications 1 à 11, puis on la fait durcir par voie thermique, et en plus, le cas échéant, par voie photochimique.

13. Procédé conforme à la revendication 12, dans lequel le substrat est un substrat en verre, en matière plastique ou en métal.

14. Corps moulés à nanostructures ou substrats porteurs de couches à nanostructures, accessibles par un procédé conforme à l'une des revendications 12 et 13.

15. Utilisation de corps moulés à nanostructures ou de substrats porteurs de couches à nanostructures, conformes à la revendication 14, dans des applications optiques.
